# FASCICULE DE BREVET EUROPEEN

(11) **EP 2 257 343 B1**
(45) Date de publication et mention de la délivrance du brevet: **15.05.2013**
(21) Numéro de dépôt: 09734604.3
(22) Date de dépôt: 26.03.2009
(51) Int. Cl.: A62B 35/00, B64D 1/22, B66C 1/38, F16B 45/02

(54) **APPAREIL DE SÉCURISATION DES SECOURS EFFECTUÉS PAR HÉLITREUILLAGE**
VORRICHTUNG ZUR SICHERUNG VON RETTUNGSOPERATION DURCH HELIHOISTING
APPARATUS FOR SECURING RESCUE OPERATIONS BY HELIHOISTING

(30) Priorité: 26.03.2008 FR 0801638
(43) Date de publication de la demande: 08.12.2010
(73) Titulaire: Zedel, 38920 Crolles (FR)
(72) Inventeur: ROCOURT, Jean-Louis, F-38330 Saint Nazaire les Eymes (FR); MAURICE, Alain, F-38660 Saint Hilaire du Touvet (FR); PETZL, Paul, F-38530 Barraux (FR)
(74) Mandataire: Hecké, Gérard
(86) Numéro de dépôt international: PCT/FR2009/000335
(87) Numéro de publication internationale: WO 2009/130404

(56) Documents cités:
- EP-A- 0 089 172
- US-A- 1 576 197
- US-A- 3 533 655
- US-A- 4 379 579

## Description

### Domaine technique de l'invention

L'invention concerne un appareil portatif utilisable par un sauveteur lors des secours effectués par hélitreuillage. L'appareil est destiné aux opérations de secours en milieu périlleux, mer ou montagne, nécessitant de recourir à un hélicoptère.

### Etat de la technique

Autrefois, la procédure en usage durant les secours en montagnes interdisait l'accrochage du câble de l'hélicoptère sur le harnais d'un sauveteur simultanément attaché à la paroi. Actuellement, les interventions sont parfois effectuées en des endroits très dangereux. Les sauveteurs doivent en permanence assurer leur propre sécurité, et celle des secourus. C'est pourquoi cette interdiction est peu à peu tombée en désuétude. Il en résulte que l'instant le plus périlleux d'un hélitreuillage apparaît quand l'hélicoptère se trouve amarré à la paroi par la longe d'assurage du sauveteur, car il ne dispose plus de sa liberté de manoeuvre. Cette liaison dangereuse s'établit par le truchement d'un montagnard contraint d'attacher simultanément son harnais au rocher et au câble du treuil de l'hélicoptère en raison de la verticalité des lieux. A cet instant précis, si une turbulence chahute l'hélicoptère, ou si le treuillage débute avant que la liaison avec la paroi ait pu être volontairement retirée, l'hélicoptère, son équipage et les personnels stationnés sur la montagne risquent une chute mortelle.

C'est pourquoi on ne compte plus les cordes tranchées dans l'urgence, les amarrages arrachés ou déformés, ni les coupures volontaires du câble de treuillage, qu'un dispositif pyrotechnique d'ultime secours sectionne pour libérer l'hélicoptère de l'emprise de la montagne. Mais l'équipage de l'hélicoptère doit appuyer au bon moment sur le bouton de commande provoquant cette rupture, sans bien savoir au juste ce qu'il va en résulter.

Le document US 3533655 concerne un dispositif de largage automatique d'une charge suspendue à un câble d'hélicoptère. La libération de la charge intervient par une action de déclenchement volontaire d'une pièce de verrouillage.

Les documents US 2852217 et BE 763926 décrivent des systèmes de suspension à décrochage automatique de la charge lorsqu'elle atteint le sol.

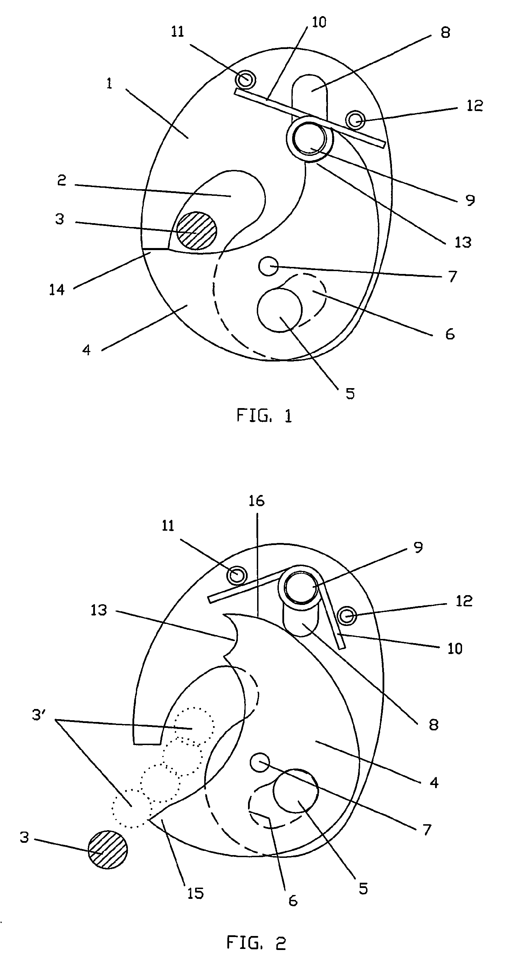

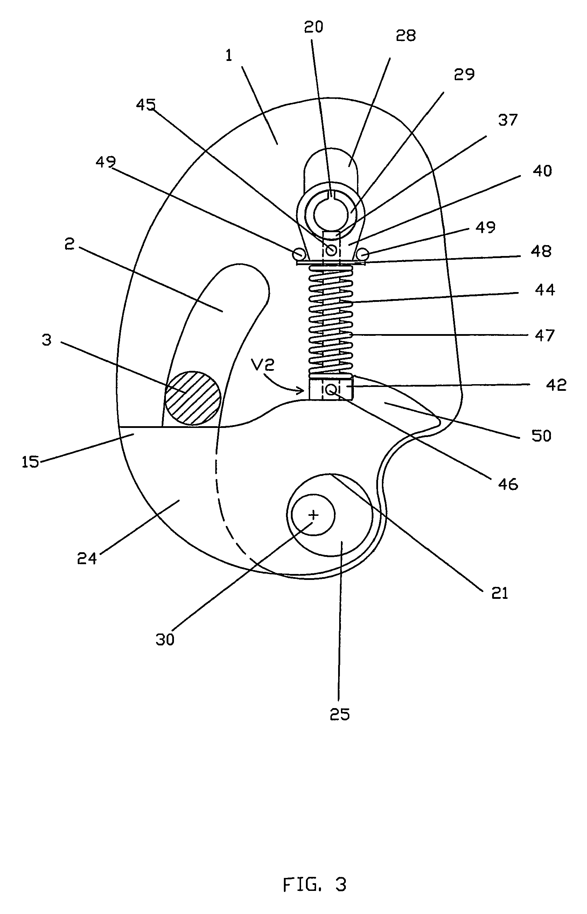

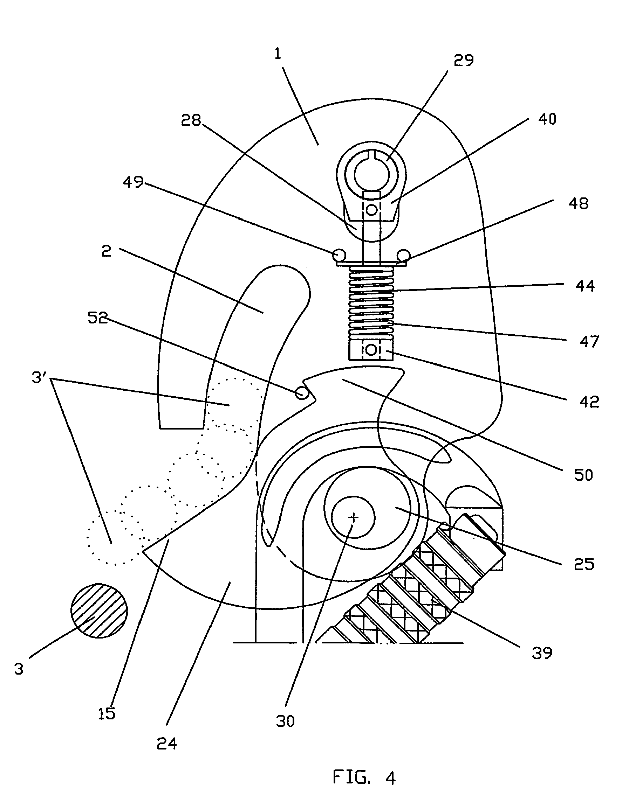

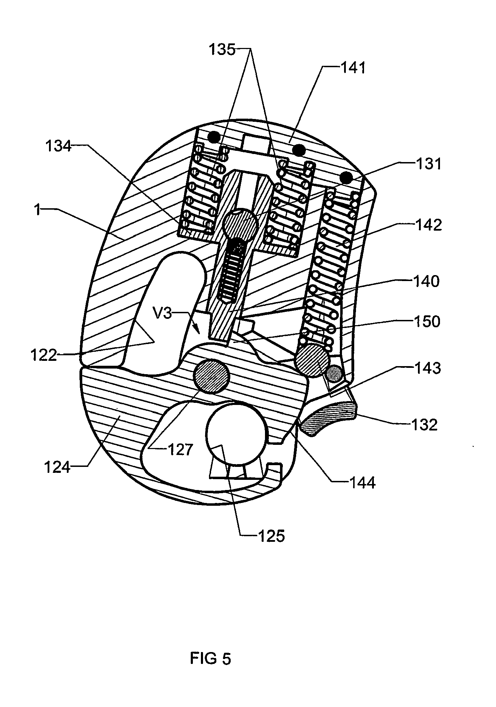

Selon le document US 4379579, le dispositif à crochet permet de larguer automatiquement la charge suspendue dès que celle-ci touche le sol (ou l'eau), à condition que le dispositif ait été au préalable, et manuellement, armé en tirant sur un câble de déverrouillage. Sur figure 1 de ce document, le crochet maintient verrouillé l'anneau (11) par l'intermédiaire duquel sera suspendue la charge (en l'occurrence un canot de sauvetage) ; ce verrouillage permet la mise en suspension de la charge sans risque de décrochage intempestif (mise en suspension, balancement, etc.) En figure 3, la charge est suspendue au crochet (via une manille 32 et le câble d'un engin de levage quelconque) ; une traction sur le câble (70) actionne le loquet (1) qui autorise la mise en rotation de la mâchoire (44) actionnée par le ressort de traction (64). Tant que la charge est en suspension, son poids interdit l'éjection de l'anneau (11) poussé par la mâchoire (44) car le ressort (64) n'est pas assez puissant pour faire franchir à l'anneau (11) le bossage ménagé sur les flasques (40). En figure 4, la charge touche le sol (ou l'eau) ; l'anneau (11) ne supporte plus de poids (hormis peut-être quelques élingues) et la mâchoire (44) toujours tirée par le ressort (64) permet alors à l'anneau (11) de franchir le bossage (40). En figure 5, l'anneau est expulsé, la charge est décrochée. La mise en place d'un nouvel anneau réarme le dispositif.

Les dispositifs précités à deux brins de liaison et à largage automatique ou manuelle de la charge, ne sont pas adaptés à la sécurisation des secours par hélitreuillage, où la charge est constituée par un sauveteur, qu'il ne faut larguer sous aucun prétexte.

### Objet de l'invention

L'objet de l'invention consiste à réaliser un appareil de sécurisation des secours par hélitreuillage destiné à faire progresser les modes opératoires et d'accroître les possibilités d'interventions, grâce à une sécurité accrue pour les personnels et les matériels impliqués dans les opérations de secours.

L'appareil de sécurisation des secours effectués par hélitreuillage, comporte un crochet ayant un premier moyen d'accrochage à un câble d'un hélicoptère, un deuxième moyen d'accrochage pour la charge,
caractérisé en ce qu'il comporte un troisième moyen d'accrochage pour une longe d'assurage logée dans une ouverture du crochet orientée vers le bas lorsque l'appareil est suspendu par le câble de l'hélicoptère, et un mécanisme de commande à déclenchement destiné à provoquer le largage automatique de la longe d'assurage restée amarrée, lorsque sa mise sous tension par la traction du câble de l'hélicoptère dépasse un seuil prédéterminé, ledit mécanisme de commande étant composé :
- d'un linguet mobile monté à pivotement sur le crochet entre des positions de fermeture et de dégagement de ladite ouverture, respectivement pour maintenir la longe (3) dans le crochet, et pour la libérer,
- et d'un verrou soumis à l'action d'un ressort de polarisation pour verrouiller ledit linguet en position de fermeture en l'absence de tension sur le premier moyen d'accrochage, et à déverrouiller ledit linguet lorsque la force de traction exercée sur le premier moyen d'accrochage surpasse celle du ressort de polarisation.

Si l'hélicoptère exerce une traction prédéfinie sur la longe d'assurage qui reste amarrée au rocher, le largage intervient automatiquement et libère instantanément l'hélicoptère.

Les trois moyens d'accrochage permettent huit configurations possibles. La table de vérité ci-dessous étudie chaque configuration.
H = Hélicoptère S = Sauveteur L = Longe
L'état logique 0 (zéro) désigne une absence de mise en tension
(charge, poids, effort, etc. inexistants)
L'état logique 1 (un) désigne une mise en tension
(charge, poids, effort, etc. appliqués)

| H S L | |
|---|---|
| 0 0 0 | l'appareil est inutilisé |
| 1 0 0 | l'appareil est suspendu seul sous l'hélicoptère (sans intérêt) |
| 0 1 0 | l'appareil est accroché au harnais d'un sauveteur (en attente de treuillage) |
| 1 1 0 | sauveteur suspendu sous l'hélicoptère, via l'appareil |
| 0 0 1 | l'appareil est suspendu par sa longe (attente de manoeuvre) |
| 1 0 1 | l'hélicoptère tire sur la longe (hors charge) : *l'appareil largue la longe* |
| 0 1 1 | paroi lisse et verticale, le sauveteur est suspendu à la longe, via l'appareil, qui assure sa sécurité : *largage de la longe impossible* |
| 1 1 1 | l'hélicoptère hisse le sauveteur (ou une charge), via l'appareil, et tire sur la longe restée amarrée: *l'appareil largue la longe.* |

Le largage de la longe d'assurage restée amarrée à la paroi du rocher est opéré automatiquement que si :
- le largage manuel n'est pas effectué,
- l'hélicoptère est en train de treuiller, et est en péril.
Sans accrochage à l'hélicoptère, le largage automatique de la longe est rendu impossible par le verrouillage mécanique du mécanisme.

Selon un premier mode de réalisation, la longe d'assurage est maintenue dans la lumière du crochet par le linguet qui peut dégager la lumière en pivotant autour d'un axe réunissant crochet et linguet. Le linguet est pourvu d'un trou permettant de recevoir le deuxième moyen d'accrochage de la charge (sauveteur, etc.). Le crochet est pourvu d'une ouverture curviligne oblongue, dont la courbure moyenne a pour rayon l'arc de cercle centré sur l'axe de pivotement du linguet. Cette ouverture curviligne oblongue reçoit le moyen d'accrochage de la charge conjointement avec le trou du linguet ; elle permet la libre rotation de ce moyen d'accrochage autour de l'axe, et limite l'amplitude de la rotation du linguet en faisant office de butées. Le crochet comporte une autre ouverture oblongue, rectiligne, permettant de recevoir le premier moyen d'accrochage à l'hélicoptère, par exemple une manille. L'axe de la manille est introduit dans un tube de guidage, coulissant dans l'ouverture oblongue rectiligne. La position de ce tube, au bas de l'ouverture oblongue (toujours selon la verticale), est imposé par un ressort enserrant le tube. Le ressort prend appui sur des butées solidaires du crochet. Le tube, et le ressort déformé par une contrainte sont simultanément mobiles dans l'ouverture oblongue rectiligne. L'action de ce ressort consiste à maintenir le tube au bas de l'ouverture oblongue rectiligne de telle manière que le linguet pivotant y soit en butée quand le linguet est fermé. Il s'agit d'un verrou maintenant le linguet en position de fermeture.

Quand la longe est accrochée sur un point fixe, sans charge suspendue à l'appareil, une traction de l'hélicoptère sur la manille provoque : la mise en tension de la longe ; le coulissement simultané de la manille, du tube de guidage et du ressort dans l'ouverture oblongue rectiligne ; le déverrouillage du linguet, devenu libre de pivoter ; l'ouverture du linguet par la mise en tension de la longe, tendue par la seule traction exercée par le ressort de verrouillage ; le largage de la longe. L'appareil reste seul suspendu à l'hélicoptère libéré de toute entrave. Le verrou retrouve sa position au bas de l'ouverture oblongue rectiligne. Le linguet reste ouvert.

Quand la longe est accrochée sur un point fixe, avec une charge suspendue à l'appareil, une traction de l'hélicoptère sur la manille provoque : le coulissement simultané de la manille, du tube de guidage et du ressort dans l'ouverture oblongue rectiligne (dû au poids de cette charge) ; le déverrouillage du linguet, devenu libre de pivoter, mais toujours maintenu en position de fermeture par le poids de la charge suspendue ; le hissage de la charge ; la mise en tension de la longe ; l'ouverture du linguet par la traction de la longe tendue; le largage de la longe. L'appareil et sa charge restent suspendus à l'hélicoptère libéré de toute entrave. Le verrou conserve sa position haute et le linguet se referme sous le poids de la charge suspendue.

Selon une deuxième mode de réalisation, le linguet est relié au deuxième moyen d'accrochage par une liaison à excentrique, laquelle supporte le deuxième moyen d'accrochage, et est traversée par l'axe de pivotement du linguet. Le linguet comporte une protubérance coopérant en position de verrouillage du verrou avec une liaison mécanique solidaire du premier moyen d'accrochage.

Selon un troisième mode de réalisation, le crochet comporte :
- un premier trou circulaire pour le deuxième moyen d'accrochage de la charge,
- un deuxième trou pour la mise en place de l'axe d'un étrier pivotant constituant le premier moyen d'accrochage au câble de treuillage de l'hélicoptère,
- et un tiroir coulissant de commande du verrou, lequel est constitué par l'extrémité inférieure d'une tige du tiroir, et une protubérance du linguet.

Le tiroir est muni d'un palonnier soumis à l'action de deux ressorts de compression prenant appui sur une butée fixe du corps. Un ressort auxiliaire est avantageusement intercalé à l'intérieur du corps entre une extension latérale de la butée, et une bille en appui sur le linguet, ladite bille coopérant avec une rampe convexe de guidage pour maintenir le linguet en position fermée, sans en entraver le déclenchement.

### Description sommaire des dessins

La figure 1 représente une vue schématique de l'appareil selon l'invention lorsqu'il se trouve dans l'état de repos sans aucune sollicitation extérieure.
La figure 2 est une vue identique de la figure 1 lorsque appareil est sollicité pour provoquer le largage de la longe.
La figure 3 montre une vue identique de la figure 1 d'une variante de réalisation, l'appareil étant dans l'état de repos.
La figure 4 est une vue identique de la figure 3 lorsque appareil est sollicité pour provoquer le largage de la longe.
Les figures 5 à 8 montrent des vues en coupe d'une autre variante de réalisation de l'appareil selon l'invention, depuis la position de repos rangée jusqu'à la position de largage.

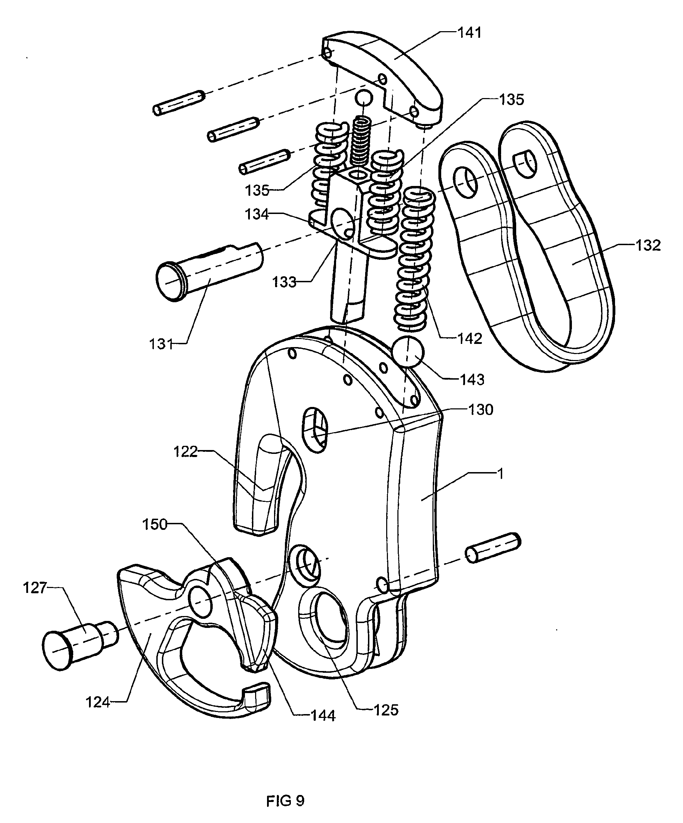

La figure 9 est une vue éclatée en perspective de la variante précédente.

### Description détaillée de l'invention.

En référence à la figure 1, l'appareil selon l'invention n'est soumis à aucune sollicitation extérieure (H=0, S=0, L=0 de la table de vérité). Il comporte un crochet 1 qui reçoit une longe 3 d'assurage dans une lumière 2, et un linguet 4 mobile percé d'un trou 5 permettant de recevoir le moyen d'accrochage à la charge (par exemple un mousqueton). Une première ouverture oblongue 6 curviligne est ménagée dans le corps du crochet 1 pour recevoir le moyen d'accrochage à la charge simultanément avec le trou 5.

Le linguet 4 est monté à pivotement limité sur un axe 7 du crochet 1 avec une course angulaire permettant le largage de la longe 3 d'assurage. Une deuxième ouverture oblongue 8 rectiligne est ménagée à la partie supérieure du corps pour le logement d'un tube de guidage 9 permettant de recevoir le moyen d'accrochage à l'hélicoptère (par exemple une manille).

Autour de ce tube 9, un ressort 10 de torsion prend appui sur le crochet 1 par l'intermédiaire de butées 11 et 12. L'extrémité du linguet 4 comporte une surface d'appui 13 concave de manière à venir en butée contre le tube de guidage 9 cylindrique dans la position de repos (figure 1). L'ensemble tube 9 et surface d'appui 13 constitue un verrou V1 interdisant au linguet 4 de s'ouvrir. La longe 3 d'assurage ne peut pas être perdue, ni larguée.

Les deux butées 11, 12 représentées comme point d'appui pour le ressort 10 constituent en même temps deux des moyens d'assemblage des tôles du crochet 1.

Sur la figure 2, l'appareil est soumis aux efforts qui conduisent au largage de la longe d'assurage 3 (H=1, S=0 ou 1, L=1 de la table de vérité). En treuillant la charge accrochée en 5, l'hélicoptère tire sur le tube de guidage 9 vers le haut, pour le faire coulissant dans la deuxième ouverture 8 oblongue. Le surface d'appui 13 échappe au tube 9, entraînant le déverrouillage du verrou V1, et la libération du linguet 4. L'appareil et la charge commencent à monter par hélitreuillage. La longe d'assurage 3 qui n'a pas été décrochée auparavant du rocher par le sauveteur, se met en tension entre son point d'amarrage à la paroi et le linguet 4. La longe prend les positions successives imagées en pointillés (3'), provoquant l'ouverture du linguet 4 déverrouillé, qui largue la longe d'assurage 3. Le linguet 4 se referme ensuite sous le poids de la charge.

Si la charge est un sauveteur, il peut introduire une nouvelle longe 3 dans l'appareil, grâce à la lumière 2 qui autorise le passage d'une longe repliée en double.

Si aucune charge n'est suspendue à l'appareil, le treuillage tend la longe 3 sur son point d'amarrage (paroi). Le déverrouillage du linguet 4 intervient dès que la tension de la longe 3 surpasse l'action du ressort 10. Le linguet 4 s'ouvre et largue la longe 3. Le linguet 4 reste alors ouvert, car le ressort 10 repousse le tube 9 au bas du de la deuxième ouverture (8) oblongue, et rien n'active le linguet 4 vers la position de fermeture.

En référence à la variante de la figure 3, l'appareil est au repos. Il n'est soumis à aucune sollicitation extérieure (H=0, S=0, L=0 de la table de vérité).

Le crochet 1 reçoit comme précédemment la longe d'assurage 3 dans la lumière 2. Le linguet 24 est fixé sur un excentrique 25 par un moyen d'assemblage (non représenté). L'ensemble crochet 1, linguet 24 et excentrique 25 est traversé par un axe 30. Le linguet 24 et à l'excentrique 25 peuvent pivoter d'un angle permettant le largage de la longe d'assurage 3. L'excentrique 25 supporte le moyen d'accrochage à la charge. Cette charge est appliquée à l'excentrique 25 selon la verticale passant par le centre du grand cercle 21.

La deuxième ouverture 28 oblongue sert de logement à un tube de guidage 29 recevant le premier moyen d'accrochage à l'hélicoptère (par exemple une manille ou un pontet). Le tube de guidage 29 est immobilisé en rotation par une tige 37. Une fente 20 constitue le point fixe d'un ressort permettant à la manille ou au pontet de se rabattre contre le corps de l'appareil.

Un capteur 40 enserre le tube de guidage 29, et est relié à un verrou 42 par une tringle 44, laquelle est fixée au capteur 40 par une goupille 45 ou autre moyen équivalent. La tringle 44 est fixée à un plot 42 d'un verrou V2 par une autre goupille 46. Un ressort à compression 47 entoure coaxialement la tringle 44, et prend appui par l'une de ses extrémités sur une plaque 48 reliée au crochet 1 par des butées 49. La plaque 48 constitue le point fixe du ressort 47, lequel s'appuie par son extrémité opposée sur le verrou 42.

Le plot 42 du verrou V2 agit en position de repos sur une protubérance 50 du linguet 24 pour l'empêche de s'ouvrir. La longe d'assurage 3 ne peut pas être perdue ni larguée.

Sur la figure 4, l'appareil de la figure 3 est sollicité par les efforts qui conduisent au largage de la longe d'assurage 3 (H=1, S=0 ou 1, L=1 de la table de vérité).

En treuillant la charge supportée par l'excentrique 25, par exemple au moyen d'un mousqueton 39, l'hélicoptère tire sur le tube de guidage 29 par l'intermédiaire d'une manille (non représentée). Le tube 29, le capteur 40, la tringle 44 et le verrou 42 coulissent vers le haut en comprimant le ressort 47. Le verrou 42 libère la protubérance 50 du linguet 24, et autorise son pivotement. L'appareil et la charge commencent à monter. La longe 3, qui n'a pas été décrochée auparavant de la paroi du rocher, se met en tension entre son point d'amarrage (paroi) et le linguet 24, et provoque l'ouverture du linguet 24. Ce dernier est déverrouillé et largue la longe (voir les positions 3' successives en pointillés). Une butée 52 solidaire du crochet 1 limite l'angle de rotation du linguet 24 à une valeur compatible avec le largage de la longe 3. Le linguet 24 se referme ensuite sous le poids de la charge.

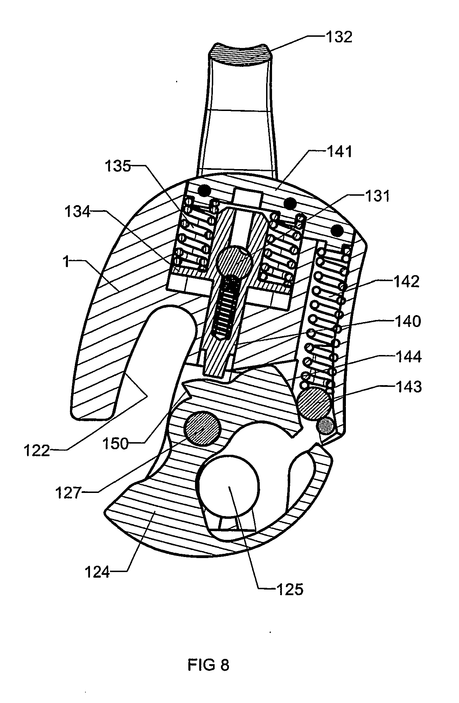

En référence aux figures 5 à 8, l'appareil comporte un crochet 1 et un linguet 124 pivotant autour d'un axe 127, en occupant une position fermée (figures 5 à 7) ou une position ouverte (figure 8). Dans la position fermée, la longe d'assurage (non représentée) est emprisonnée dans la lumière 122, suite à la venue en engagement du linguet 124 contre le corps 1.

Le corps 1 est doté d'un premier trou 125 circulaire pour le moyen d'accrochage de la charge, et d'un deuxième trou 130 pour la mise en place de l'axe 131 d'un étrier 132 constituant le premier moyen d'accrochage au câble de treuillage de l'hélicoptère.

L'axe 131 est logé dans un tiroir 133 de commande d'un verrou V3, lequel est constitué par l'extrémité inférieure d'une tige 140 du tiroir 133, et une protubérance 150 du linguet 124. Le tiroir 133 est muni d'un palonnier 134 soumis à l'action de deux ressorts 135 de compression prenant appui sur une butée 141 fixe. Dans l'état de repos, les ressorts 135 sollicitent le verrou V3 vers la position verrouillée en contact avec la protubérance 150.

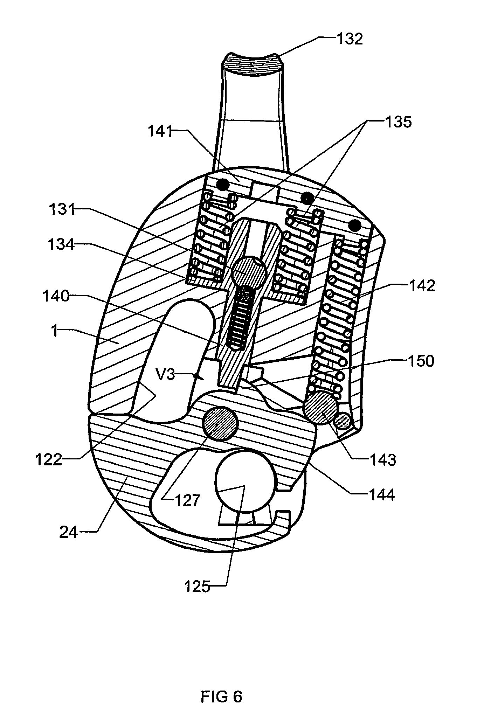

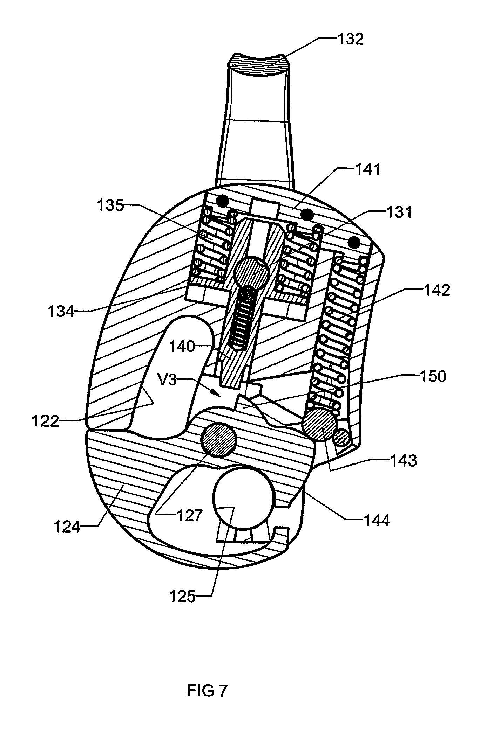

Un ressort auxiliaire 142 est intercalé à l'intérieur du corps 1 entre une extension latérale de la butée 141, et une bille 143 en appui sur le linguet 124. La bille 143 coopère avec une rampe 144 convexe de guidage pour maintenir le linguet 124 en position fermée (figures 5 et 6). Après déverrouillage du verrou V3 (figures 7 et 8), le ressort auxiliaire 142 ne s'oppose pas au pivotement du linguet 123 vers la position ouverte grâce au roulement de la bille 143 le long de la rampe 144.

## Revendications

1. Appareil de sécurisation des secours effectués par hélitreuillage, comportant un crochet (1) ayant un premier moyen d'accrochage (9, 29, 131) à un câble d'un hélicoptère, un deuxième moyen d'accrochage (5, 25, 125) pour une charge,
**caractérisé en ce qu'**il comporte un troisième moyen d'accrochage (2, 122) pour une longe (3) d'assurage logée dans une ouverture (2, 122) du crochet orientée vers le bas lorsque l'appareil est suspendu par le câble de l'hélicoptère, et un mécanisme de commande à déclenchement destiné à provoquer le largage automatique de la longe (3) d'assurage restée amarrée, lorsque sa mise sous tension par la traction du câble de l'hélicoptère dépasse un seuil prédéterminé, ledit mécanisme de commande étant composé :
- d'un linguet (4, 24, 124) mobile monté à pivotement sur le crochet (1) entre des positions de fermeture et de dégagement de ladite ouverture, respectivement pour maintenir la longe (3) dans le crochet (1), et pour la libérer,
- et d'un verrou (V1, V2, V3) soumis à l'action d'un ressort (10, 47, 135) de polarisation pour verrouiller ledit linguet en position de fermeture en l'absence de tension sur le premier moyen d'accrochage, et à déverrouiller ledit linguet lorsque la force de traction exercée sur le premier moyen d'accrochage (9, 29, 131) surpasse celle du ressort de polarisation.

2. Appareil de sécurisation selon la revendication 1, **caractérisé en ce que** le deuxième moyen d'accrochage pour la charge est formé par un trou (5) ménagé dans le linguet (4), et que le crochet (1) comporte une ouverture oblongue (6) curviligne centrée sur l'axe (7) de pivotement du linguet (4).

3. Appareil de sécurisation selon la revendication 2, **caractérisé en ce que** le verrou (V1, V2) comporte un tube (9, 29) de guidage en liaison avec le premier moyen d'accrochage, et destiné à se déplacer dans une ouverture (8, 28) oblongue rectiligne du corps (1).

4. Appareil de sécurisation selon la revendication 3, **caractérisé en ce que** le tube (9, 29) de guidage est associé à un ressort (10, 47) sollicitant le verrou (V1, V2) en position de verrouillage.

5. Appareil de sécurisation selon la revendication 1, **caractérisé en ce que** le linguet (24) est relié au deuxième moyen d'accrochage par une liaison à excentrique (21, 25), laquelle supporte le deuxième moyen d'accrochage, et est traversée par l'axe (30) de pivotement du linguet (24).

6. Appareil de sécurisation selon la revendication 1, **caractérisé en ce que** le linguet (24, 124) comporte une protubérance (50, 150) coopérant en position de verrouillage du verrou (V2, V3) avec une liaison mécanique solidaire du premier moyen d'accrochage.

7. Appareil de sécurisation selon la revendication 1, **caractérisé en ce que** le crochet (1) comporte :
- un premier trou (125) circulaire pour le deuxième moyen d'accrochage de la charge,
- un deuxième trou (130) pour la mise en place de l'axe (131) d'un étrier (132) pivotant constituant le premier moyen d'accrochage au câble de treuillage de l'hélicoptère,
- et un tiroir (133) coulissant de commande du verrou (V3), lequel est constitué par l'extrémité inférieure d'une tige (140) du tiroir (133), et une protubérance (150) du linguet (124).

8. Appareil de sécurisation selon la revendication 7, **caractérisé en ce que** le tiroir (133) est muni d'un palonnier (134) soumis à l'action de deux ressorts (135) de compression prenant appui sur une butée (141) fixe du corps (1).

9. Appareil de sécurisation selon la revendication 8, **caractérisé en ce qu'**un ressort auxiliaire (142) est intercalé à l'intérieur du corps (1) entre une extension latérale de la butée (141), et une bille (143) en appui sur le linguet (124), ladite bille coopérant avec une rampe (144) convexe de guidage pour maintenir le linguet (124) en position fermée, sans en entraver le déclenchement.

## Patentansprüche

1. Vorrichtung zur Sicherung von Hubschrauber-Rettungseinsätzen, die einen Haken (1) mit einer ersten Einhängevorrichtung (9, 29, 131) in ein Seil eines Hubschraubers, einer zweiten Einhängevorrichtung (5, 25, 125) für eine Last, **dadurch gekennzeichnet, dass** sie eine dritte Einhängevorrichtung (2, 122) für eine Sicherungsleine (3) umfasst, die sich in einer Öffnung (2, 122) des Hakens befindet, die nach unten weist, während die Vorrichtung am Seil des Hubschraubers hängt, sowie einen Auslöse-Steuerungsmechanismus, der dazu bestimmt ist, den automatischen Abwurf der noch gesicherten Sicherungsleine (3) zu bewirken, wenn die Spannung durch Zug am Hubschrauberseil einen bestimmten Schwellenwert überschreitet, welcher Steuerungsmechanismus besteht aus:
- einer beweglichen Sicherung (4, 24, 124), die schwenkbar am Haken (1) zwischen einer Schließ- und einer Freigabeposition der genannten Öffnung montiert ist, um jeweils die Leine (3) im Haken (1) zu halten oder sie freizugeben,
- und einem Riegel (V1, V2, V3), der der Wirkung einer Polarisationsfeder (10, 47, 135) unterliegt, um die genannte Sicherung in Verschlussposition zu verriegeln, wenn auf die erste Einhängevorrichtung keine Spannung ausgeübt wird, und die Sicherung freizugeben, wenn die auf die erste Einhängevorrichtung (9, 29, 131) ausgeübte Zugkraft diejenige der Polarisationsfeder übersteigt.

2. Sicherungsvorrichtung nach Anspruch 1, **dadurch gekennzeichnet, dass** die zweite Einhängevorrichtung für die Last von einer Öffnung (5) gebildet wird, die in der Sicherung (4) vorgesehen ist, und dass der Haken (1) eine längliche, gekrümmte Öffnung (6) aufweist, die auf die Schwenkachse (7) der Sicherung (4) zentriert ist.

3. Sicherungsvorrichtung nach Anspruch 2, **dadurch gekennzeichnet, dass** der Riegel (V1, V2) ein Führungsrohr (9, 29) umfasst, das mit der ersten Einhängevorrichtung verbunden und dazu bestimmt ist, sich in einer länglichen, geraden Öffnung (8, 28) des Körpers (1) zu bewegen.

4. Sicherungsvorrichtung nach Anspruch 3, **dadurch gekennzeichnet, dass** das Führungsrohr (9, 29) an eine Feder (10, 47) gekoppelt ist, die den Riegel (V1, V2) in die Verriegelungsposition zieht.

5. Sicherungsvorrichtung nach Anspruch 1, **dadurch gekennzeichnet, dass** die Sicherung (24) mit der zweiten Einhängevorrichtung über eine Exzenterverbindung (21, 25) verbunden ist, die die zweite Einhängevorrichtung trägt, und von der Schwenkachse (30) der Sicherung (24) durchquert wird.

6. Sicherungsvorrichtung nach Anspruch 1, **dadurch gekennzeichnet, dass** die Sicherung (24, 124) eine Auskragung (50, 150) aufweist, die in Verriegelungsposition des Riegels (V2, V3) mit einer mechanischen Verbindung zusammenwirkt, die fest mit der ersten Einhängevorrichtung verbunden ist.

7. Sicherungsvorrichtung nach Anspruch 1, **dadurch gekennzeichnet, dass** der Haken (1) umfasst:
- eine erste kreisförmige Öffnung (125) für die zweite Vorrichtung zum Einhängen der Last,
- eine zweite Öffnung (130) für das Anbringen des Bolzens (131) eines Schwenkbügels (132), der die erste Einhängevorrichtung für das Bergungsseil des Hubschraubers bildet.
- und eine Schublade (133) zum Betätigen des Riegels (V3), der vom unteren Ende einer Stange (140) der Schublade (133) und einer Auskragung (150) der Sicherung (124) gebildet wird.

8. Sicherungsvorrichtung nach Anspruch 7, **dadurch gekennzeichnet, dass** die Schublade (133) mit einer Traverse (134) versehen ist, die der Wirkung zweier Kompressionsfedern (135) unterliegt und an einen festen Anschlag (141) des Körpers (1) anliegt.

9. Sicherungsvorrichtung nach Anspruch 8, **dadurch gekennzeichnet, dass** eine Hilfsfeder (142) im Körper (1) zwischen einer seitlichen Verlängerung des Anschlags (141) und einer Kugel (143) vorgesehen ist, die an der Sicherung (124) anliegt, welche Kugel mit einer konvexen Führungsschräge (144) zusammenwirkt, um die Sicherung (124) in geschlossener Position zu halten, ohne die Freigabe zu behindern.

## Claims

1. Apparatus for securing rescue operations performed by helihoisting, comprising a hook (1) having a first attachment means (9, 29, 131) to a cable of a helicopter, a second attachment means (5, 25, 125) for a load,
**characterized in that** it comprises a third attachment means (2, 122) for a belay tether (3) housed in a aperture (2, 122) of the hook downward-facing when the apparatus is hanging by the cable of the helicopter, and a control mechanism designed to trigger automatic release of the belay tether (3) that has remained attached when tensioning by traction of the helicopter cable exceeds a predetermined threshold, said control mechanism being composed of :
- a mobile pawl (4, 24, 124) mounted pivotally on the hook (1) between the closed and released positions of said aperture to respectively maintain the tether (3) in the hook (1) and to release the latter therefrom,
- and a latch (V1, V2, V3) submitted to the action of a polarisation spring (10, 47, 135) to latch said pawl in the closed position in the absence of tension on the first attachment means, and to unlatch said pawl when the force exerted on the first attachment means (9, 29, 131) exceeds that of the polarisation spring.

2. Apparatus for securing according to claim 1, **characterized in that** the second attachment means for the load are formed by a hole (5) arranged in the pawl (4), and that the hook (1) comprises a curved oblong aperture (6) centred on the pivoting spindle (7) of the pawl (4).

3. Apparatus for securing according to claim 2, **characterized in that** the latch (V1, V2) comprises a guide tube (9, 29) joined to the first attachment means and designed to move in a straight oblong aperture (8, 28) of the body (1)

4. Apparatus for securing according to claim 3, **characterized in that** the guide tube (9, 29) is associated with a spring (10, 47) biasing the latch (V1, V2) to the latched position.

5. Apparatus for securing according to claim 1, **characterized in that** the pawl (4) is connected to the second attachment means by a link with an eccentric (21, 25) which supports the second attachment means, and through which the pivoting spindle (30) of the pawl (24) passes.

6. Apparatus for securing according to claim 1, **characterized in that** the pawl (24, 124) comprises a protuberance (50, 150) operating in conjunction, in the latched position of the latch (V2, V3), with a mechanical link securedly affixed to the first attachment means.

7. Apparatus for securing according to claim 1, **characterized in that** the hook (1) comprises:
a circular first hole (125) for the second attachment means of the load,
- a second hole (130) for fitting the spindle (131) of a pivoting clamp (132) constituting the first attachment means to the hoisting cable of the helicopter,
- and a slide rack (133) commanding the latch (V3), which is formed by the bottom end of a rod (140) of the slide rack (133), and a protuberance (150) of the pawl (124).

8. Apparatus for securing according to claim 7, **characterized in that** the slide rack (133) is provided with a cross-bar (134) subjected to the action of two compression springs (135) bearing on a fixed stop (141) of the body (1).

9. Apparatus for securing according to claim 8, **characterized in that** an auxiliary spring (142) is inserted inside the body (1) between a lateral extension of the stop (141) and a ball-bearing (143) pressing against the pawl (124), said ball-bearing operating in conjunction with a convex guide ramp to keep the pawl (124) in the closed position without hampering triggering.
